# EUROPEAN PATENT SPECIFICATION

(11) **EP 3 398 373 B1**
(45) Date of publication and mention of the grant of the patent: **26.10.2022**
(21) Application number: 16819963.6
(22) Date of filing: 29.12.2016
(51) Int. Cl.: H04W 76/16, H04W 36/14, H04W 36/16, H04W 24/04

(54) **ASSISTED HANDOVER TO VOLTE IN CASE OF VOWIFI FAILURE**
UNTERSTÜTZTE ÜBERGABE AN VOLTE BEI VOWIFI-VERSAGEN
TRANSFERT ASSISTÉ SUR VOLTE (VOIX SUR LTE) EN CAS DE DÉFAILLANCE DE VOWIFI (VOIX SUR WIFI)

(30) Priority: 31.12.2015 WO PCT/EP2015/203278
(43) Date of publication of application: 07.11.2018
(73) Proprietor: British Telecommunications public limited company, London E1 8EE (GB)
(72) Inventor: BROWN, Ruth, London EC4V 5BT (GB); GOMEZ, Alistair, London EC4V 5BT (GB)
(74) Representative: British Telecommunications public limited company Intellectual Property Department
(86) International application number: PCT/EP2016/082894
(87) International publication number: WO 2017/114932

(56) References cited:
- EP-A2- 2 925 056
- US-A1- 2009 046 655
- US-A1- 2014 313 888
- "Wi-Fi calling - extending the reach of VoLTE to Wi-Fi Wi-Fi calling - extending the reach of VoLTE to Wi-Fi", , 30 January 2015 (2015-01-30), XP055251865, Retrieved from the Internet: URL:http://www.ericsson.com/res/thecompany /docs/publications/ericsson_review/2015/er -wifi-calling.pdf [retrieved on 2016-03-31]
- "3rd Generation Partnership Project; Technical Specification Group Services and System Aspects; Architecture enhancements for non-3GPP accesses (Release 13)", 3GPP STANDARD; 3GPP TS 23.402, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V13.4.0, 15 December 2015 (2015-12-15), pages 1-298, XP051046485,

## Description

### Field of Invention

The present invention relates to managing wireless communication services and in particular to a method and apparatus for controlling device handover between WLAN and cellular service access.

### Background

Cellular data networks provide data connectivity to mobile devices having cellular network interfaces. The network is formed of a network core for handling control plane functions and data packet routing, and a radio access network (RAN) of macrocell base stations located throughout the coverage area of the mobile network for wireless communication with subscriber mobile devices. An example of a cellular network architecture is Long Term Evolution (LTE). Unlike previous generation second generation (2G) and third generation (3G) cellular networks which offer packet switched data services on top of a circuit switched voice platform, LTE is an all-packet switched data network architecture that does not support the traditional voice calling platform.

Since LTE does not support traditional voice telephony, some mobile network operators provide traditional voice telephone services by making the mobile device switch from the LTE network to a 2G/3G service for the duration of a telephone call or when a short messaging service (SMS) is received. This process is known as Circuit Switched Fall-Back (CSFB).

CSFB provides a reliable way of handling voice calls but requires the network operator to maintain both the LTE and legacy networks, the former for data connectivity and the latter for voice telephony and slow data access where the LTE network coverage is lacking.

Wireless local area networks (WLANs) operating in accordance with the IEEE 802.11 family of standards (commonly referred to as Wi-Fi) are common in many user locations and provide data connectivity over a short geographic range. Typically the wireless local area network is generated and maintained by a wireless access point which acts as a packet routing interface between devices connected to the WLAN (e.g. smartphones, tablets) and local devices connected via a wired interface (televisions, network attached storage). The wireless access point serves local devices and will typically be co-located, or integrated with an external network interface such as a modem for providing a backhaul link to external networks such as the Internet via an Internet Service Provider's core network. Example backhaul technologies include Digital Subscriber Line (xDSL) copper/fibre and cable based on the Data over Cable Service Interface Specifications (DOCSIS) architecture.

Such a combined WLAN, routing and modem device will be referred to as a hub throughout the description.

Both LTE and WLANs are examples of packet switched data networks in which application data is split into packets and the packets can take any path within the network to arrive at the receiver. In contrast the circuit switched networks require a dedicated data path to be established prior to sending data along the dedicated circuit.

### VolP/VoLTE/VoWiFi

Voice over Internet Protocol (VoIP) applications are known for allowing voice communication via a packet switched network. The voice data is sampled into packets of voice data and the packets are sent over the data network. Although the packets may arrive in a different order to the transmission order, packet loss is tolerated because latency has a greater negative effect on the quality of experience to the users.

VOIP applications are Over-The Top (OTT) services which typically require a user to generate a username identity and generally a VoIP call can only be established between two users having the same VoIP application on their mobile devices. Even where the VoIP application allows calls to conventional telephones and the caller information display shows the caller's telephone number, when the callee tries to return the call, the call goes to the standard dialler and not the VoIP application.

Furthermore, in the VoIP service it is not possible to maintain a call if the mobile device moves out of range of the current access point and requires a handover from one access technology to another.

Voice over LTE (VoLTE) is a voice service running over LTE uses optimised headers and priority marking to provide a voice service using the packet switched network with an aim to reducing/replacing the reliance on CSFB and VoIP. This will reduce operating overheads and may allow parts of the legacy 2G and 3G platforms to be switched off.

Due to the prevalence of WLANs in many areas, the Voice over Wi-Fi (VoWiFi) or Wi-Fi Calling service has also been deployed by several network operators. In VoWiFi, the WLAN is regarded as a non-3GPP access network base station to the LTE network so that voice calls are made and received using the standard telephony software and packet data is tunnelled to and from the cellular network core. VoWiFi therefore appear to extend the cellular network coverage to indoor locations and allows handover to a normal VoLTE or CSFB service when the mobile device moves to an outdoor location.

Mobile devices such as smartphones will therefore have both a cellular network interface and a WLAN interface for data connectivity. Traditionally WLANs offer faster, more reliable and unmetered service so the mobile device is configured to prefer the WLAN interface for all data connectivity when both WLAN and cellular access is available.

With the conventional processing, the mobile device is only concerned with the quality of the WLAN signal to the hub. As long as the WLAN signal strength is above a signal strength threshold, the mobile device will stay connected to the WLAN even if there is no onward connection the external networks such as the Internet. This can cause confusion for users because the phone displays a strong WLAN connection (typically via an icon with various bars to indicate signal strength) but the data services do not connect.

The present invention addresses the above problems.

US2014313888 describes a system and method for managing call connections between mobile subscribers and an EP-based wireless telecommunications network through a wireless access point. Communications between the mobile subscribers and the IP-based wireless telecommunications network are initiated by a registration request. During the registration request various identifiers are communicated to the system. The system is arranged to log the identifiers and associate those identifiers with the entry point (e.g., the wireless access point) into the IP based wireless network. Call connections from the mobile subscribers are monitored for various throughput and call quality-based metrics. Call handoffs between the IP-based wireless communications network and the cellular telephony network are managed by the system based on the monitored call quality and throughput metrics on a per-access point basis using the registered identifiers.

US2009046655 describes a system comprising an inter-RAT/inter-network redundancy controller (IRC). The IRC is configured to communicate with a source gateway in communication with a source radio access network (RAN) using a first radio access technology (RAT). The IRC is further configured to communicate with a target gateway in communication with a target RAN using a second RAT. The IRC is further configured to promote a handover of a user equipment from the source RAN connected to the source gateway to the target RAN connected to the target gateway when the source gateway fails.

### Summary

In one aspect, the present invention provides a method according to Claim 1.

In a further aspect, the present invention provides a wireless access point according to Claim 7.

### List of Figures

Embodiments of the present invention will now be described with the aid of the accompanying Figures in which:
Figure 1 schematically shows an overview of a telecommunications network of the first embodiment;
Figure 2 schematically shows the behaviour of a hub and UE in the telecommunications network when a link to a VoWiFi service component is disrupted;
Figure 3 schematically shows the internal components of a hub in accordance with the first embodiment;
Figure 4 schematically shows an overview of the connections formed by a VoWiFi service monitor to plural hubs and plural ePDGs of various MNO networks;
Figure 5 schematically shows the components of a VoWiFi service monitor in the first embodiment;
Figure 6 is a flowchart showing the operation of the VoWiFi service monitor in checking the link status to the MNOs;
Figure 7 is a flowchart showing the operation of the hub to cause UEs to disconnect or reconnect to VoWiFi from VoLTE; and
Figure 8 schematically shows the internal components of a user entity device in accordance with the first embodiment.

### Description

### System overview

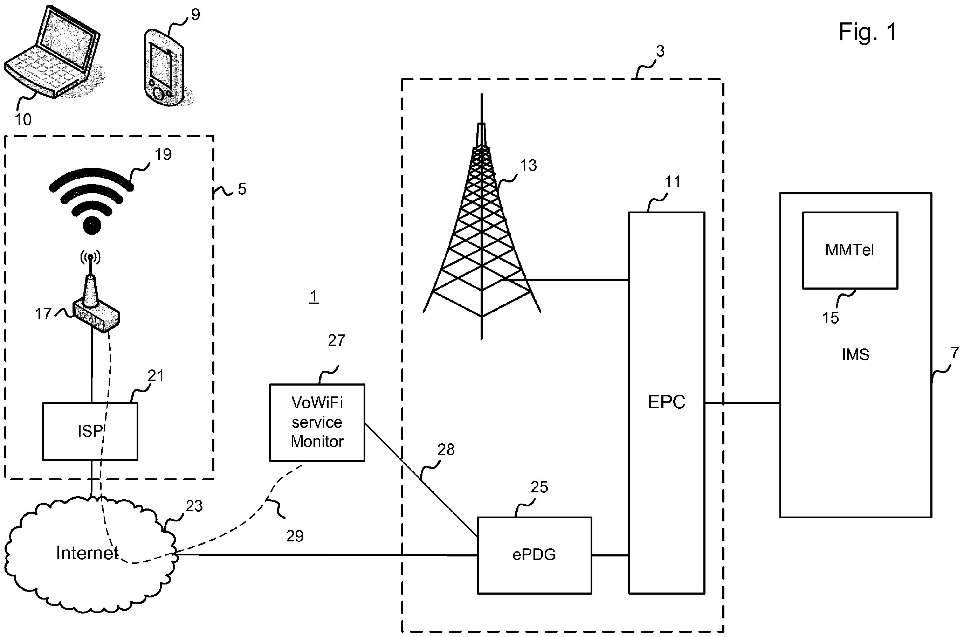

Figure 1 shows an overview of the main components in a telecommunications communication system 1 according to the first embodiment. The system 1 has several functional subsystems:
a Long Term Evolution (LTE) cellular network 3 infrastructure;
non-cellular network infrastructure 5 including a local network and Internet Service Provider (ISP) architecture; and
an IP Multimedia Subsystem (IMS) 7.

The LTE cellular network 3 provides cellular network client devices, known as User Entities (UE) such as mobile telephones 9 with data and voice services using a packet-switched IP network in contrast to the older circuit switched networks. The LTE cellular network includes a network core 11 and a radio access network formed of eNodeBs 13 for connecting services and resources in the network core 11 to the UEs 9. The network core 11 contains the standard control functions such as a Multimedia Mobility Entity (MME) (not shown), a Home Subscriber Server (HSS) (not shown), and a Policy Configuration Rules Function (PCRF) (not shown). For routing data packets to remote resources, there are a number of Serving Gateways (SGW) (not shown) and Packet Gateways (PGW) (not shown).

The IMS 7 is an IP data network which provides a unified service architecture for all networks. Multiple services can be provided on a single control/service layer even though the access networks may be different. The IMS 7 therefore reduces the need for duplication in data services/applications. The VoLTE and VoWiFi voice calling services are hosted in an application server 15 within the IMS 7 which in this embodiment is provided by a service known as the Multimedia Telephony Service (MMTel).

The non-cellular network infrastructure 5 includes a wireless access point/modem router device 17, hereinafter referred to as a hub, located in the home generating a wireless local area network (WLAN) 19 in accordance with the IEEE 802.11 family of standards to allow communication with UEs 9 and also WLAN only devices such as a computer 10. For external network access, the hub 17 communicates with an Internet Service Provider (ISP) 21 which routes data via a wide area network such as the Internet 23 to external servers and users.

Due to the ability of the LTE cellular network 3 to use non-cellular access for applications such as Wi-Fi-Offload, the LTE cellular network 3 also includes an Evolved Packet Data Gateway (ePDG) 25 which acts as a termination point for IPSec tunnels with the UE over non-trusted 3GPP IP systems. This allows data into the EPC network core 11 for processing within the LTE cellular 3 and IMS 7 networks.

The system in Figure 1 also includes a VoWiFi service monitor 27 which is a network component maintained by the ISP or a third party. As shown in Figure 1, the VoWiFi service monitor has a data link 28 to the ePDG 25 and also a data link 29 to the hub 17. The VoWiFi service monitors whether the ePDG 25 is accessible, and therefore VoWiFi is available, on behalf of the hub 17 and informs the hubs of any changes in the accessibility of the ePDG 25 over time.

The UE 9 has both WLAN and LTE radio interfaces for accessing the non-cellular network infrastructure and the LTE cellular network respectively and the UE 9 supports VoLTE, VoWiFi and CSFB voice calls. To highlight the difference between UEs 9 and other connected WLAN devices 10, the computer 10 only has a WLAN interface and therefore can only access the WLAN 19 of the hub 17 but not the cellular network 3 since it does not have an interface capable of sending and receiving LTE signals.

### Behaviour of UE for activating Wi-Fi and LTE interfaces

As mentioned above, the UE 9 has both WLAN and LTE interfaces and is capable of both VoLTE and VoWiFi call handling. Since an eNodeB 13 of the LTE network has a larger geographical coverage range than a WLAN 19, in general the UE will be connected to the LTE network 3 and will use VoLTE.

However, when the UE is within range of a WLAN 19 such as shown in Figure 1, there is overlap in the connectivity ranges, and the UE 9 could connect to data services using either the cellular interface or the WLAN interface. In general, the default policy is that a WLAN connection is preferred. So when a UE is connected to the LTE network and it detects a known WLAN, the UE will try to use the WLAN.

Therefore upon detection of a known WLAN, the UE 9 will enable its WLAN interface and disable the cellular interface causing any existing services to also be disconnected. This change is generally transparent to the user of the UE as it has little impact to the operation of services such as file transfers and web browsing. However, the general UE policy of preferring WLANs to cellular data interfaces can have an impact on the Quality of Experience for users of voice services using VoWiFi instead of VoLTE.

In particular, the VoWiFi service is only available when the UE 9 has a data link to the MMTel service 15 in the IMS 7 via the ePDG 25. If the ePDG 25 is not operational, then the UE cannot communicate access the MMTel service and therefore will not be able to make and receive voice calls using VoWiFi.

However, as long as the UE detects the WLAN 19, it will maintain the WLAN connection in preference to the LTE connection. Therefore even if there is no connection to the VoWiFi service, the UE 9 will remain connected to the WLAN 19 which may result in the user of the UE missing voice calls because the phone is not registered on either the VoWiFi or the VoLTE services.

In the embodiment, the hub 17 is aware that some connected devices can use VoWiFi and so it uses information from the VoWiFi service monitor 27 regarding the accessibility of the ePDG 25, and therefore the availability of the VoWiFi service, to manage UEs access to VoWiFi.

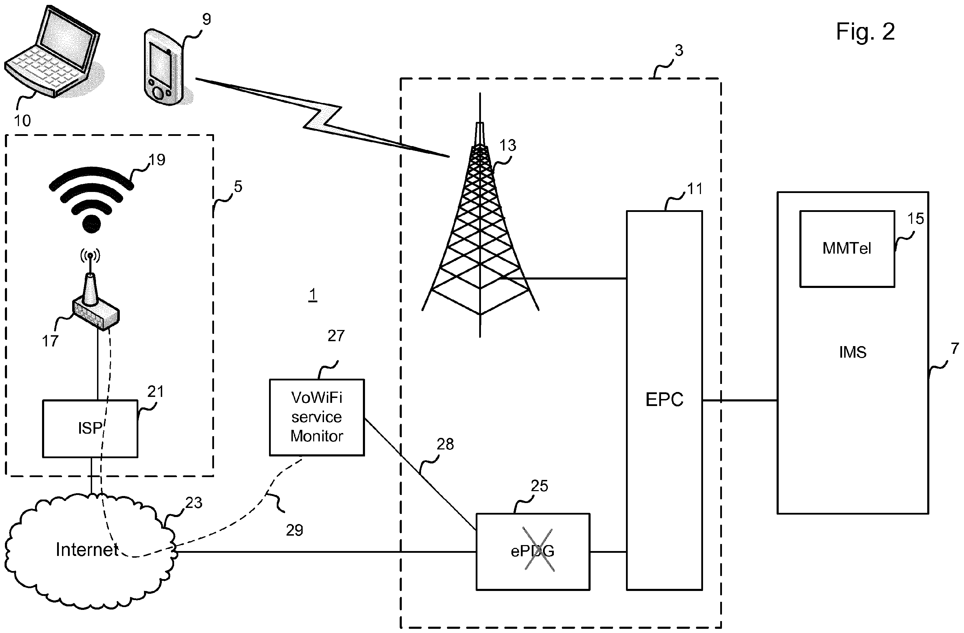

As shown in Figure 2, if the ePDG 25 loses service, the VoWiFi service monitor will notice the loss of service for example because the logical data link 28 is down, and inform the hub 17 that the ePDG 25 is not available. With the new data, the hub can then notify connected VoWiFi capable UEs 9 using the VoWiFi service for that MNO that in order to maintain voice connectivity, the UEs 9 should handover to VoLTE despite the WLAN 19 being available.

Since it is only the ePDG 25 or the link to the ePDG 28 which is determined to be inaccessible, the UE 9 may switch to VoLTE and LTE for all data services, or maintain both wireless connections so that LTE is used for VoLTE but all other data services use Wi-Fi.

The VoWiFi service monitor 27 constantly monitors the link to the ePDG and when the ePDG 25 or the connection to the ePDG 25 is restored, the hub 17 is notified so that it can instruct connected UEs 9 that handover back to VoWiFi is available.

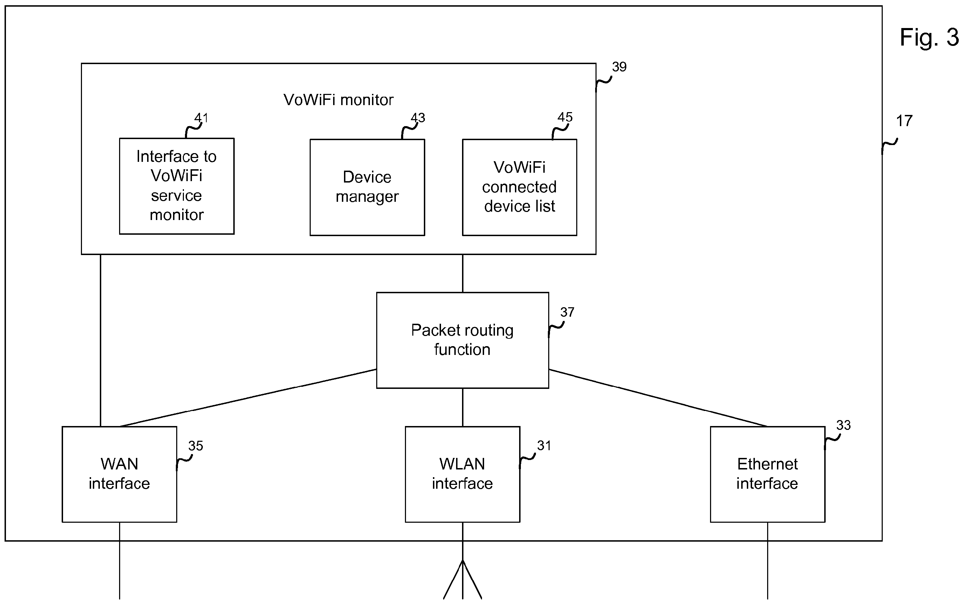

The components of the hub will now be described with reference to Figure 3.

Figure 3 shows the internal components of the hub 17 in more detail. The hub 17 contains a number of network interfaces for communication with various types of network device. For local devices, there is a Wireless Local Area Network (WLAN) interface 31 for communication with wireless devices using a wireless protocol such as the IEEE 802.11 family of wireless LAN standards known as Wi-Fi. In this embodiment, the WLAN interface 31 is compliant with the 802.11ac standard for WLAN operation. For wired LAN devices there is an Ethernet interface 33 in accordance with the IEEE 802.3 standards.

For connectivity to the Internet Service Provider (ISP), the hub 17 has a Wide Area Network (WAN) interface 35 which in this embodiment is a modem compliant with the Digital Subscriber Line (xDSL) family of standards such as Very High Speed DSL (VDSL) modem. In an alternative where the ISP is based on Data Over Cable Service Interface Specification (DOCSIS), the WAN interface 35 is a cable modem compliant with the DOCSIS cable standards.

The hub 17 also contains a packet routing function 37 which is responsible for managing the flow of data packets between the three interfaces 31, 33, 35. The packet routing function 37 processes the headers of incoming packets received on the three interfaces 31, 33, 35 and determines where to send the packets for onward delivery to the intended packet destination. The packet routing function 37 will also include functions such as Network Address Translation (NAT) for directing packets between the local interfaces 31, 33 and the WAN interface 35.

To process the information from the VoWiFi service monitor 27 and apply the information to connected UEs 9, the hub 17 contains a VoWiFi monitor function 39. This function is connected to the WAN interface 35 and the packet routing function 37 and is responsible for communication with the VoWiFi service monitor 27 to determine when UEs 9 would not be able to use VoWiFi and if required to notify the UEs 9 to switch to VoLTE.

The VoWiFi monitor function 39 contains an interface to the VoWiFi service monitor 41, a UE manager 43 and a VoWiFi connected client list 45.

The interface to the VoWiFi service monitor 41 is linked to the VoWiFi service monitor 27 via data link 29 to receive status information about the ePDG 25 of the MNO 3. The connected device list 45 contains the identity of any UEs 9 which are using the VoWiFi service. The connected device list 45 is a subset of the total population of devices connected to the WLAN. Whilst any WLAN capable device 9, 10 can connect to the hub 17 provided it has the relevant credentials, not every device will be VoWiFi capable. For example, certain smart phones have both VoLTE and VoWiFi capability and, but older smartphones, laptops and computers will not be capable of supporting VoWiFi and therefore will not benefit from the processing of the first embodiment. Furthermore, some smartphones may have the relevant hardware, but the service has not been enabled by their MNO. It is therefore important for the hub 17 to identify a set of VoWiFi capable UEs from the total population of connected UEs on the WLAN to reduce its processing load.

In this embodiment, the hub 17 makes a passive determination of whether the device is operating a VoWiFi service by analysing the address information of data packets sent between UEs and external resources.

The VoWiFi monitor 39 retrieves a list of known ePDG addresses from an ePDG directory. The ePDGs are gateways to link Non-Trusted Non-3GPP networks to network operator EPCs and IMS services. The addresses of the ePDGs are publically known and therefore can be provided by the ISP 21 to the hubs 17 via a management service such as TR-069 or similar method for ISP 21 to hub 17 communication. Alternatively the VoWiFi service monitor 27 provides a list of ePDGs it is monitoring during a registration process by the hub.

The VoWiFi monitor 39 identifies VoWiFi capable UEs 9 from the total set of connected WLAN devices by analysing the IP Flows traversing the hub 17. In particular any IP Flows which have an ePDG gateway address as destination can be assumed to be an IP flow for VoWiFi traffic between a VoWiFi capable UE 9 and the MMTel voice service 15. If any such flows are present, the VoWiFi monitor 39 extracts the device information such as MAC address and saves a mapping between the UE 9 and the IP address of the ePDG of the subscriber MNO so that the hub has a record of the subset of WLAN devices 9 which are VoWiFi capable and are using or have used the VoWiFi service to a known ePDG 25.

Monitoring IP flows relies on the standard processing of a UE 9 which is capable of VoWiFi service to establish the IPSec tunnel to the ePDG 25 as soon as it connects to the WLAN 19 in order to register and/or handover to VoWiFi from VoLTE. Therefore devices which do not establish a connection to an ePDG are considered to be standard WLAN devices.

The scanning process is periodically performed by the VoWiFi monitor 39 to maintain the validity of the connected client list 45 so that any new devices 9 that connect to or disconnect from the WLAN 19 are identified. In this embodiment, the scan is performed every 5 minutes.

Furthermore, in accordance with this embodiment, the connection client list also contains entry fields for storing the status of the various ePDGs. The data is provided by the VoWiFi service monitor as will be described later.

The UE manager 43 is responsible for communicating with the VoWiFi capable UEs 9, details of which are stored in the connected client list, and especially to inform those UEs 9 when the ePDG is unavailable and also when the ePDG is available again after a service disruption.

Further details about the operation of the hub 17 and VoWiFi monitor function 39 will be described later once the other network components have been described.

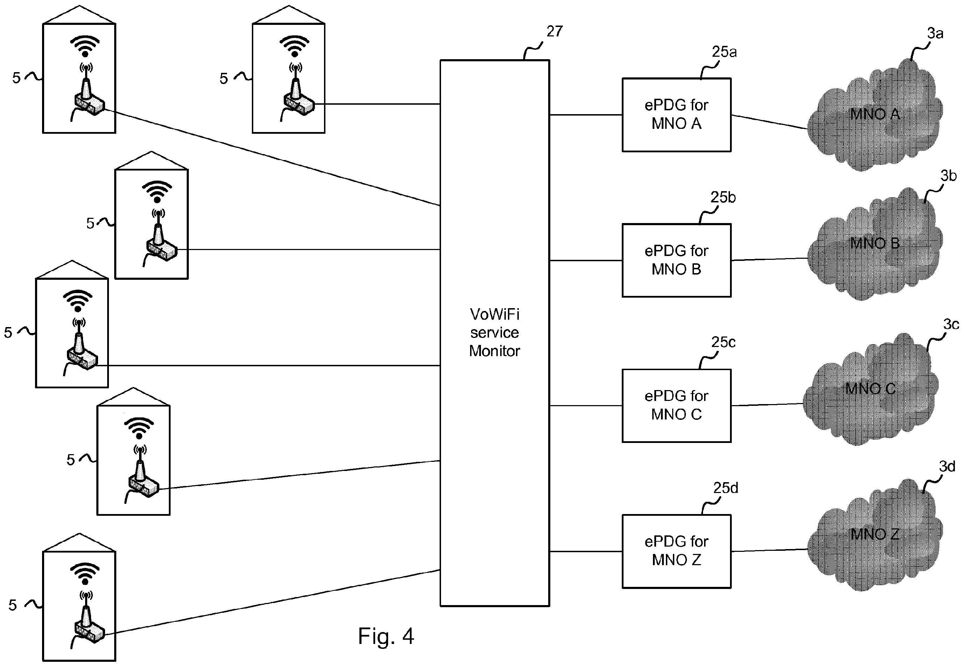

In most countries, there is more than one MNO to improve competition and provide more subscriber choice. Therefore monitoring a single MNO as shown in Figure 1 is not sufficient because the UEs 9 within the local area network are probably subscribed to different MNOs. Figure 4 shows the typical configuration of the VoWiFi service monitor 27 in relation to various hubs 17 and different ePDGs 25 of MNOs 3.

The VoWiFi service monitor 27 is configured with the details of each MNO 3 in a service area so that each ePDG 25 corresponding to a VoWiFi capable MNO 3 can be monitored for service availability. In Figure 4, four MNOs 3a, 3b, 3c, 3d are shown, providing a VoWiFi service and each having a respective ePDG 25 to allow access from external networks.

The VoWiFi service monitor 27 is also connected to a plurality of hubs, each serving different UEs 9 which are subscribed to one of the four MNOs 3a, 3b, 3c, 3d. Using the information collected from the ePDG monitoring, the VoWiFi service monitor can therefore send information about the status of each ePDG to each hub 17 periodically.

By making a central collector of ePDG status information, the number of status requests to the ePDGs is minimised.

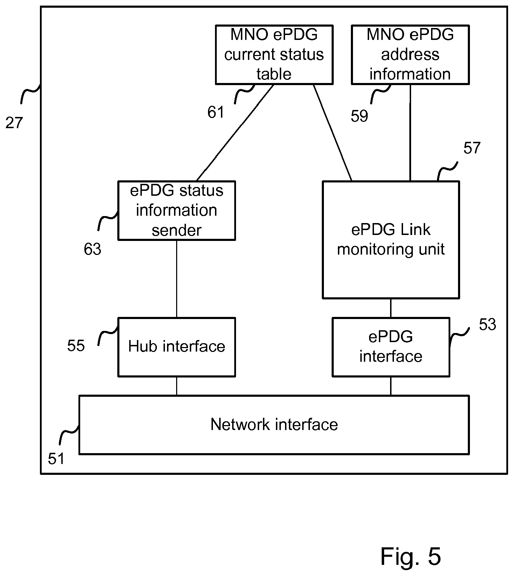

Figure 5 shows the functional components of the VoWiFi service monitor 27.

The VoWiFi service monitor 27 is configured as a server and contains a network interface 51 for external device communication. The network interface 51 can be divided into two main interfaces, an ePDG interface 53 for communication with the ePDGs 25 and a hub interface 55 for communication with the hubs 17.

An ePDG link monitoring unit 57 controls communication via the ePDG interface 53 which receives input from a MNO ePDG address information data store 59 which contains pre-stored IP address information for the location of each ePDG. In this embodiment, the status of the ePDG is determined by Pinging the address of the ePDG. If each set in the ping is successfully transmitted and acknowledged, then the logical data to the ePDG is deemed to be an indication that the ePDG is functioning correctly. If the pings are lost, then a problem is assured to have occurred either at the ePDG or the Wi-Fi link and therefore the ePDG is deemed to be inaccessible.

A MNO ePDG current status table holds the information relating to the results of the ePDG status scan.

An example of the contents of the MNO ePDG current status table is shown below. In the example all ePDGs for the set of MNOs are determined to be available.

**Table 1**

| MNO | ePDG Destination IP (via secure tunnel) | Logical Link state |
|---|---|---|
| 3a | MNO 3a ePDG server IP | UP |
| 3b | MNO 3b ePDG server IP | UP |
| 3c | MNO 3c ePDG server IP | UP |

In this embodiment, the network availability of the ePDG associated with an MNO 3 is used as the indicator for whether the VoWiFi is/will be available to UEs 9. This is because the ePDG is the publicly addressable entry point to the MNO network. All VoWiFi traffic must travel via this network component between the MMTel service and any UEs 9 using VoWiFi. Therefore if access to the ePDG is disrupted then the VoWiFi service will not be available to any UEs 9.

The VoWiFi service monitor 27 is configured to monitor the logical network path between devices in the public network domain and the edge of the MNO network represented by the ePDG. Although the network paths will not be identical, if the VoWiFi network monitor 27 can establish contact with the ePDG, then other publically addressable devices such as the hub and UEs 9 should also be able to form a logical data path to the ePDG.

On the hub facing side of the VoWiFi service monitor 27, an ePDG status information sender is responsible for registering hubs subscribing to the monitoring service and using the data in the MNO ePDG current status table to notify registered hubs about ePDG status.

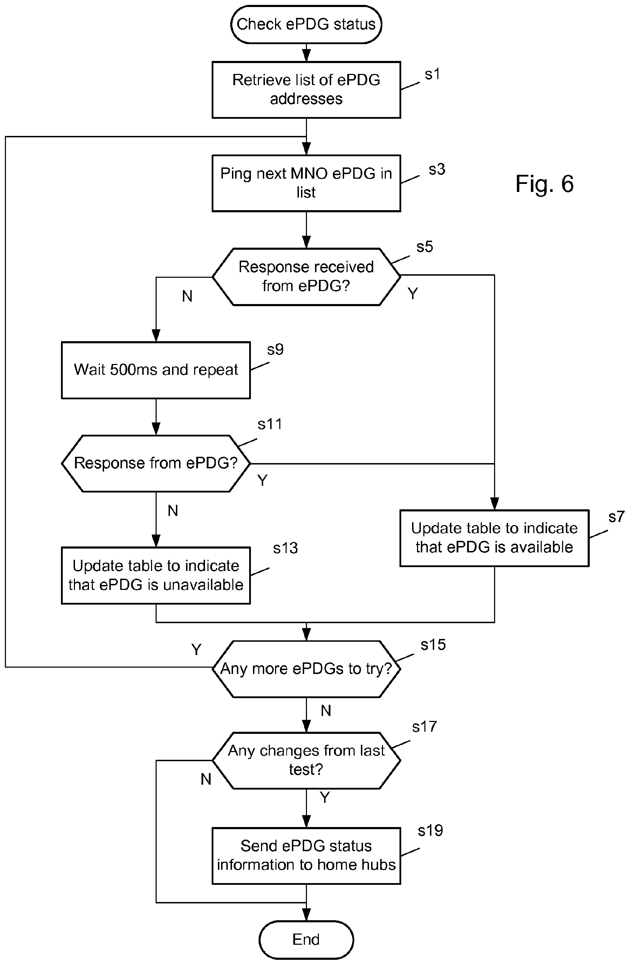

Figure 6 is a flowchart showing the operation of the components of the VoWiFi service monitor 27.

In step s1, the list of ePDG addresses are retrieved from the MNO ePDG address information data store 59. This list indicates the publically accessible IP address of each ePDG 25 in the country or region of operation covered by the VoWiFi service monitor 27 which in this example is 4 MNOs. The address information is provided and installed by a system administrator. This address information can also be changed by the system administrator when the ePDG addresses change or there is temporary offline maintenance.

In step s3, the ePDG link monitoring unit 57 selects one of the ePDGs in the list 59 and pings the address for a period of time or number of messages. This is to establish whether the ePDG is still publically accessible.

In step s5, a test if performed to determine whether a response has been received from the ePDG.

If a response to the ping was received, then processing proceeds to step s7 which updates the MNO ePDG current status table 61 to indicate that the ePDG is available.

If the rest in step s5 fails, the ePDG link monitoring unit 59 waits for a period of time, in this case 500ms in step s9 before checking again for a test in step s11. If a response is received, then processing proceeds to step s7 described above.

If a response is still not received, then it is assumed that the link to the ePDG link or the ePDG itself is down and in step s13 the MNO ePDG current status table 61 is updated to indicate the lack of service.

After step s13 and step s7, in step s15 a test is carried out to determine whether there are any further ePDGs in the list to try. If there are more ePDGs then processing returns to step s3 so that more ePDGs can be tested.

For example, if the ePDG service monitor 27 can reach the ePDGs 25a and 25b but cannot reach the ePDG 25c of MNO 3c, then the MNO ePDG current status table 61 would be updated to the following:

**Table 2**

| MNO | ePDG Destination IP (via secure tunnel) | Logical Link state |
|---|---|---|
| 3a | MNO 3a ePDG server IP | UP |
| 3b | MNO 3b ePDG server IP | UP |
| 3c | MNO 3c ePDG server IP | DOWN |

After step s15, if there are no further ePDGs to try, a test is carried out in step s17 to determine whether there have been any changes to the MNO ePDG current status table 61 information. If there have not been any, then the currently held information is accurate and since there is no need to send the same information twice, processing ends.

However, if there are changes, then in step s19 in the first embodiment, the ePDG status information is sent to all hubs 17 and processing ends.

With the above processing, the VoWiFi service monitor 27 can provide hubs 17 with current information about the status of the ePDGs 25 so that the hubs are aware of service loss and service restoration in order to inform connected VoWiFi and VoLTE capable UEs 9 when they should switch services.

The VoWiFi service monitor 27 provides a centralised network entity for monitoring the status of the ePDGs 25 thereby reducing the complexity of the hubs 17 and reducing network traffic in determining the ePDG status.

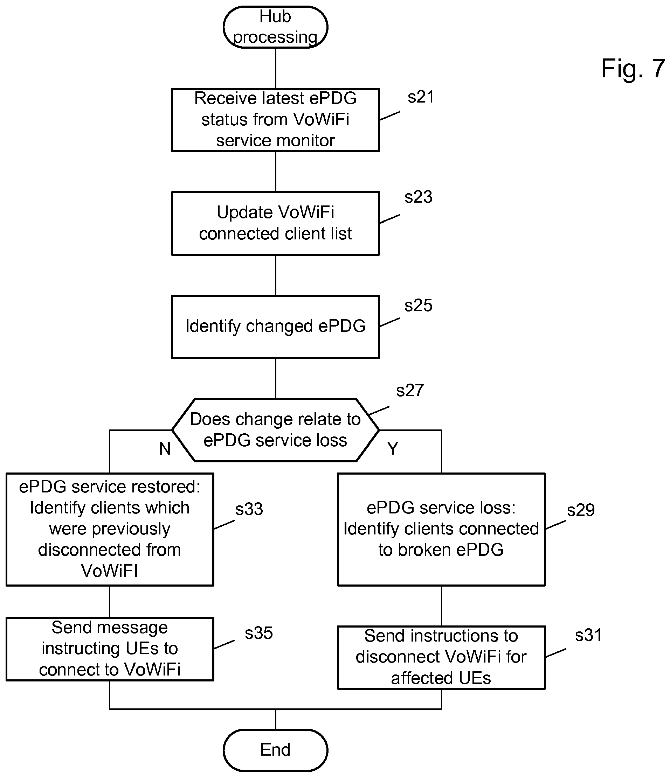

The processing of each hub 17 connected to the VoWiFi service monitor 27 will now be described. Figure 7 is a flowchart showing the operation of the hubs 17 in response to a status message from the VoWiFi service monitor 27. As explained above, the VoWiFi service monitor 27 will only send a new status message when a change has been detected in the logical link to at least one of the ePDGs.

In step s21 the latest ePDG status message is received by the interface to the VoWiFi service monitor 41. In step s23, the contents of the message are used to update the hub's 17 VoWiFi connected client list 45.

For example, if the earlier contents of the connected client list 45 had contained the following data prior to the reception of the latest ePDG status message:

**Table 3**

| Connected Devices | UE MAC address | VoWiFi Destination IP | VoWiFi service logical link state |
|---|---|---|---|
| 9a | D8: BD:3C:38:D4BB | MNO 3a ePDG server IP | UP |
| 9b | C3:BB:3C:38:A4:BB | MNO 3a ePDG server IP | UP |
| 9c | D2:BB:3C:22:A4:AA | MNO 3b ePDG server IP | UP |
| 9d | A3:CA:3C:21:B2:AC | MNO 3c ePDG server IP | UP |

This would indicate that there are four VoWiFi capable devices 9a-9d. Two of the devices 9a and 9b are subscribers of a first MNO 3a, the third listed connected device 9c is a subscriber of the second MNO 3b and the fourth listed connected device 9d is a subscriber of the third MNO 3c.

Following the reception of the latest ePDG status message containing information that ePDG 25c is not contactable, the connected client list 45 would be updated as follows:

**Table 4**

| Connected Devices | UE MAC address | VoWiFi Destination IP | VoWiFi service logical link state |
|---|---|---|---|
| 9a | D8: BD:3C:38:D4BB | MNO 3a ePDG server IP | UP |
| 9b | C3:BB:3C:38:A4:BB | MNO 3a ePDG server IP | UP |
| 9c | D2:BB:3C:22:A4:AA | MNO 3b ePDG server IP | UP |
| 9d | A3:CA:3C:21:B2:AC | MNO 3c ePDG server IP | DOWN |

In step s25, the changed ePDG 25c is identified, in this example the status of the ePDG 25c for MNO 3c has changed.

In step s27, the type of change is determined and in particular whether the ePDG status change relates to a service loss. If the ePDG status is a service loss, the processing moves to step s29 where the connected client list 45 is reviewed to determine if there are any connected UEs which are affected by the service loss.

In the example, device 9d is a subscriber of MNO 3c and therefore they will have lost VoWiFi connectivity even though the UE 9d will not have noticed since the Wi-Fi link between the UE 9d and the hub 17 is still active. Therefore UE 9d must be informed about the service loss.

In step s31, the hub 17 sends a notification message to any affected UEs, in this example only one UE is affected. The notification message includes instructions to tell the affected UE to disconnect from the VoWiFi service and processing ends.

If in step s27 it is determined that the status change is not a service loss but a service restoration, then in step s33 the VoWiFi monitor 39 of the hub 17 will perform processing to identify affected devices which have previously disconnected from VoWiFi, and then in step s35 any identified devices are sent an instruction message to cause the affected UE to reconnect to VoWiFi from VoLTE. Processing then ends.

With the above processing, the hubs 17 are responsible for detecting changes in the ePDG status based on updates from the VoWiFi service monitor 27 and then determining if any of their locally connected devices are affected by the ePDG change. If any connected devices are present, the hub in this embodiment is responsible for managing the handover behaviour of the UEs from VoLTE to VoWiFi and from VoWiFi to VoLTE.

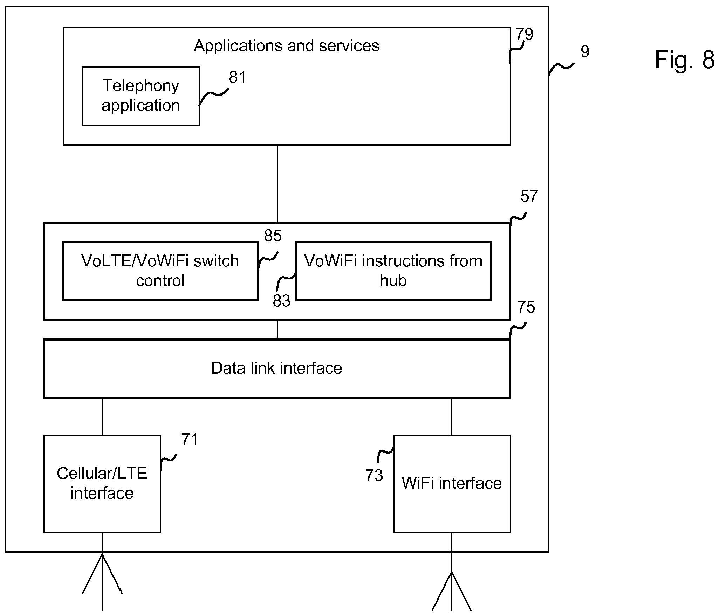

The components of the UE 9 will now be described with reference to Figure 8.

The UE 9 contains a cellular network interface 71 and a WLAN interface 73. The cellular interface 71 is compatible with the eNodeB 13 of the cellular network 3 and the WLAN interface 73 is compatible with the WLAN interface 31 of the hub 17.

Since either interface 71, 73, may be used by the UE 9, a data link interface 75 is responsible for enabling and disabling each interface 71, 73 as required and for routing user data and control packets to the interfaces 71, 73.

An operating system 77 is responsible for the overall operational tasks performed by the UE 9 and links a number of applications and services 79 to the data layer interface 75. One of the applications within the applications and services 79 is a telephony application 81 which is compatible with VoLTE and VoWiFi.

In normal operation, the telephony application 61 is configured to connect to the MMTel service 15 provided in the IMS 7 to provide voice services via VoLTE and VoWiFi. The UE 9 registers for VoWiFi when it is connected to a WLAN 19 and the UE 9 registers for VoLTE when it is connected to the LTE cellular network 3.

Within the operating system 77, the UE also has a receiver 83 for receiving instructions from the hub regarding VoWiFi connectivity and the UE also has a VoLTE/VoWiFi switch control 85 for moving the telephony service from VoLTE from VoWiFi and from VoWiFi to VoLTE.

In the first embodiment, each VoWiFi capable UE 9 will switch from VoLTE to VoWiFi and from VoWiFi to VoLTE in accordance with the handover instructions sent by the VoWiFi monitor 39. In particular, when the hub 17 instructs a UE 9 to handover from VoWiFi to VoLTE because the ePDG for that UE is down, the UE 9 will disable its VoWiFi service and enable VoLTE. However the UE 9 will maintain the WLAN connection so that other data services continue to travel via the WLAN interface and only the VoLTE service uses the LTE cellular connection.

Although there may be a battery penalty from enabling two wireless data connections simultaneously, the benefit is that only the VoLTE service is using LTE and therefore there is no disruption caused by a switch of network adaptor to other data services that may be active on the UE. Furthermore, most cellular subscribers to an MNO have data usage limits on the LTE service and therefore a transparent switch of all data services to LTE when the user believes they are on a WLAN (which is generally unmetered) would be a negative user experience.

Another benefit of maintaining the WLAN connection is that when the hub is informed that data connectivity to the ePDG has been restored, it can use the WLAN connection to send the instructions to connect back to VoWiFi.

When the UE receives such an instruction, it will handover to VoWiFi and disable the LTE interface to save power.

In the first embodiment the VoWiFi service monitor monitors the logical data path to the ePDG of a MNO as an indication of whether VoWiFi service is possible for subscribers of the MNO network. Due to the standard configuration of UEs in preferring WLAN connectivity over LTE cellular connectivity, if the VoWiFi service is unavailable the UEs will not automatically switch to VoLTE while a WLAN connection is available between the UE and a hub. When a change in the status of an ePDG is detected, the VoWiFi service monitor informs any connected hubs. The hubs receive notifications from the VoWiFi service monitor and for each notification determine whether the ePDG status change affects one or more of the VoWiFi capable UEs connected to the hub. If at least one such device is affected by the change, the hub notifies the affected UE with instructions to handover from VoWiFi to VoLTE. In this way the UEs are less likely to miss incoming voice calls due to a failure in the VoWiFi service.

### Alternatives and Modifications

In the embodiment, a centralised VoWiFi service monitor performs the checks on the availability of the ePDGs and then informs hubs when there is a change to any of the monitored ePDGs. In a modification, the hubs are configured to tell the VoWiFi service monitor which ePDGs are being used by their connected devices so that the VoWiFi service monitor filters the set of monitored ePDGs and only notifies a hub when one of the relevant ePDGs has changed. This increases the complexity of the VoWiFi service monitor because it must maintain a more complex profile for each registered hub. However each hub is simpler because it will only hear about ePDG statuses which are in use by connected VoWiFi devices.

In the embodiment, the VoWiFi service monitor is a centralised function for monitoring the status of various ePDGs. Hubs register with the VoWiFi service monitor for status updates. This arrangement allows for collation of information on the overall network of MNOS. In an alternative, the VoWiFi service monitor is not present but the functionality of the monitor is present in each hub, i.e. each hub is configured to ping the ePDGs associated with connected VoWiFi UEs to determine whether the VoWiFi service is available. Any affected UEs are notified and instructed to handover.

This alternative, saves registration routines with an external device and furthermore provides a more accurate assessment of the status of the logical data link between the UE and the ePDG since the data packets are more likely to travel along similar paths as the real VoWiFi packets. For example if there is a problem at the ISP section of the data link, the link monitor located at the hub would detect the problem, even though it is not possible to determine the cause, and instruct VoWiFi capable UEs to handover to VoLTE. However, there will increased network traffic and processing load on the ePDGs due to the increase in the number of hubs sending ping packets to the ePDGs.

## Claims

1. A method of operating a wireless access point (17), said wireless access point being in the form of a Wireless Local Area Network, WLAN, routing and modem device and being suitable for connecting to a public wide area network (23), the wireless access point being operated so as to manage access of at least one mobile device (9) to a voice service located in a cellular network (3), in which the voice service being accessible via a base station (13) of the cellular network and also via a gateway server (25), accessible to the wireless access point (17), said gateway server being located at a boundary between the cellular network and the public wide area network (23), the wireless access point having:
a wireless network interface (31) for communication with the at least one mobile device via a wireless local area network link (19); and a wide area network interface (35) for communication with the public wide area network, and
the at least one mobile device having:
a cellular network interface (71) and a wireless network interface (73), wherein the at least one mobile device is configured to connect to the voice service via a first path from the mobile device to the voice service via the base station and cellular network, and a second path from the mobile device via the wireless access point, public wide area network, the gateway server and the cellular network;
the method, being performed by the wireless access point (17), comprising the steps of:
monitoring whether the at least one mobile device is currently connected to the voice service via the second path; and **characterised by** the steps of:
processing presence information, said presence information being received from a gateway presence monitor (27) located in the public wide area network and relating to the accessibility of the gateway server via the public wide area network (s21); and
in dependence upon said monitoring and processing of presence information, if the at least one mobile device is connected to the voice service via the second path and the gateway server is not accessible via the public wide area network (s29), the wireless access point instructing the at least one mobile device to connect to the voice service via the first path (s31).

2. A method according to claim 1, wherein the at least one mobile device is configurable to access the voice service via the second path using Voice over Wi-Fi , VoWiFi, and to access the voice service via the first path using Voice over LTE , VoLTE, wherein, the at least one mobile device is instructable, by the wireless access point, to perform a handover process from VoWiFi to VoLTE.

3. A method according to any preceding claim, further comprising:
processing further presence information; and
if the gateway server is determined to be accessible, instructing the at least one mobile device to connect to the voice service via the second path (s35).

4. A method according to any preceding claim further comprising generating said presence information by establishing contact with the at least one cellular gateway device.

5. A method according to any preceding claim, wherein a plurality of mobile devices are connected to the wireless access point via the wireless local area network link, and at least one of the plurality of mobile devices are associated with a second cellular network (3a, 3b, 3c, 3d), the second cellular network having a respective second gateway server (25a, 25b, 25c, 25d) for access to a second voice service associated with the second cellular network via the public wide area network, further comprising:
storing in a data store, an association between each of the plurality of mobile devices and its respective gateway server;
process gateway server presence information relating to the accessibility of each gateway server s21); and
in the event of detecting that at least one of the cellular gateways is unavailable:
identifying any mobile devices which are subscribers of the cellular network corresponding to the unavailable cellular gateway; and
instructing any identified mobile devices to connect to the voice service via a respective first path (s31).

6. A computer program comprising executable instructions , which, when the program is executed by a processor comprised in a wireless access point (17), cause the processor to carry out the method of any of claims 1, 3, 4 or 5.

7. A wireless access point (17), being in the form of a Wireless Local Area Network, WLAN, routing and modem device and suitable for managing access of at least one mobile device (9) to a voice service located in a cellular network (3), the voice service being accessible via a base station (13) of the cellular network and also via a gateway server (25), accessible to the wireless access point, said gateway server being located at a boundary between the cellular network and a public wide area network (23), the at least one mobile device having a cellular network interface (71) and a wireless network interface (73), wherein the at least one mobile device is configured to connect to the voice service via a first path from the mobile device to the voice service via the base station and cellular network, and a second path from the mobile device via the wireless access point, public wide area network, the gateway server and the cellular network, said wireless access point (17) comprising:
a wireless network interface (31) for communication with the at least one mobile device;
a wide area network interface (35) for communication with the public wide area network;
means for monitoring (27) whether the at least one mobile device is currently connected to the voice service via the second path; and **characterised in that** the wireless access point further comprises:
means for processing presence information (57), said presence information being received from a gateway presence monitor (27) located in the public wide area network and relating to the accessibility of the gateway server via the public wide area network; and
means for instructing (17) the at least one mobile device to connect to the voice service via the first path upon determining, using the means for monitoring and the means for processing, if the at least one mobile device is connected to the voice service via the second path and the gateway server is not accessible via the public wide area network.

8. A wireless access point according to claim 7, wherein the at least one mobile device is configurable to access the voice service via the second path using Voice over Wi-Fi , VoWiFi, and to access the voice service via the first path using Voice over LTE , VoLTE, wherein the at least one mobile device is instructable, by the wireless access point, to perform a handover process from VoWiFi to VoLTE.

9. A wireless access point according to claim 7 or 8, wherein the presence information processing means is configured to periodically process further presence information, and the instructing means is configured to instruct the at least one mobile device to reconnect to the voice service via the second path in the event that the gateway server is determined to be accessible.

10. A wireless access point according to any of claims 7 to 9, further comprising means for generating said presence information by establishing contact with the at least one cellular gateway device via the public wide area network.

11. A wireless access point according to any of claims 7 to 10, wherein a plurality of mobile devices are connected to the wireless access point via the wireless local area network link, and at least one of the plurality of mobile devices are associated with a second cellular network 93a, 3b, 3c, 3d), the second cellular network having a respective second gateway server (25a, 25b, 25c, 25d) for access to a second voice service associated with the second cellular network via the public wide area network, the wireless access point further comprising:
a data store (59) storing an association between each of the plurality of mobile devices and its respective gateway server; and
wherein:
the presence information processing means is configured to process gateway server presence information relating to the accessibility of each gateway server (s21); and
the means for instructing (17), in the event of detecting that at least one of the cellular gateways is unavailable, is operable to:
identify any mobile devices which are subscribers of the cellular network corresponding to the unavailable cellular gateway; and
instruct any identified mobile devices to connect to the voice service via a respective first path (s31).

## Patentansprüche

1. Verfahren zum Betreiben eines drahtlosen Zugangspunktes (17), wobei der drahtlose Zugangspunkt die Form einer drahtlosen lokalen Netzwerk-, WLAN-, Routing- und Modemvorrichtung hat und zum Verbinden mit einem öffentlichen Weitverkehrsnetzwerk (23) geeignet ist, wobei der drahtlose Zugangspunkt so betrieben wird, dass er den Zugang von mindestens einer mobilen Vorrichtung (9) zu einem Sprachdienst verwaltet, der sich in einem zellularen Netzwerk (3) befindet, in dem der Sprachdienst durch eine Basisstation (13) des zellularen Netzwerks und auch durch einen Gatewayserver (25) zugänglich ist, der für den drahtlosen Zugangspunkt (17) zugänglich ist, wobei sich der Gatewayserver an einer Begrenzung zwischen dem zellularen Netzwerk und dem öffentlichen Weitverkehrsnetzwerk (23) befindet, wobei der drahtlose Zugangspunkt aufweist:
eine drahtlose Netzwerkschnittstelle (31) zur Kommunikation mit der mindestens einen mobilen Vorrichtung über eine drahtlose lokale Netzwerkverknüpfung (19); und eine Weitverkehrsnetzwerkschnittstelle (35) zur Kommunikation mit dem öffentlichen Weitverkehrsnetzwerk, und
die mindestens eine mobile Vorrichtung, die aufweist:
eine zellulare Netzwerkschnittstelle (71) und eine drahtlose Netzwerkschnittstelle (73), wobei die mindestens eine mobile Vorrichtung dazu ausgelegt ist, sich mit dem Sprachdienst über einen ersten Pfad von der mobilen Vorrichtung zu dem Sprachdienst über die Basisstation und das zellulare Netzwerk zu verbinden, und einen zweiten Pfad von der mobilen Vorrichtung über den drahtlosen Zugangspunkt, das öffentliche Weitverkehrsnetzwerk, den Gatewayserver und das zellulare Netzwerk;
wobei das Verfahren, das von dem drahtlosen Zugangspunkt (17) durchgeführt wird, die folgenden Schritte umfasst:
Überwachen, ob die mindestens eine mobile Vorrichtung aktuell über den zweiten Pfad mit dem Sprachdienst verbunden ist; und **gekennzeichnet durch** die folgenden Schritte:
Verarbeiten von Anwesenheitsinformationen, wobei die Anwesenheitsinformationen von einem Gateway-Anwesenheitsmonitor (27) empfangen werden, der sich in dem öffentlichen Weitverkehrsnetzwerk befindet und sich auf die Zugänglichkeit des Gatewayservers über das öffentliche Weitverkehrsnetzwerk (s21) bezieht; und
in Abhängigkeit von dem Überwachen und Verarbeiten von Anwesenheitsinformationen, wenn die mindestens eine mobile Vorrichtung über den zweiten Pfad mit dem Sprachdienst verbunden ist und der Gatewayserver nicht über das öffentliche Weitverkehrsnetzwerk (s29) zugänglich ist, der drahtlose Zugangspunkt die mindestens eine mobile Vorrichtung anweist, sich über den ersten Pfad (s31) mit dem Sprachdienst zu verbinden.

2. Verfahren nach Anspruch 1, wobei die mindestens eine mobile Vorrichtung dazu ausgelegt werden kann, über den zweiten Pfad unter Verwendung von Voice-over Wi-Fi, VoWiFi, auf den Sprachdienst zuzugreifen und über den ersten Pfad unter Verwendung von Voice-over LTE, VoLTE, auf den Sprachdienst zuzugreifen, wobei die mindestens eine mobile Vorrichtung von dem drahtlosen Zugangspunkt angewiesen werden kann, einen Übergabeprozess von VoWiFi zu VoLTE durchzuführen.

3. Verfahren nach einem der vorhergehenden Ansprüche ferner umfassend:
Verarbeiten weiterer Anwesenheitsinformationen; und
wenn bestimmt wird, dass der Gatewayserver zugänglich ist, Anweisen der mindestens einen mobilen Vorrichtung, sich über den zweiten Pfad (s35) mit dem Sprachdienst zu verbinden.

4. Verfahren nach einem der vorhergehenden Ansprüche, ferner umfassend das Erzeugen der Anwesenheitsinformationen durch Herstellen eines Kontakts mit der mindestens einen zellularen Gateway-Vorrichtung.

5. Verfahren nach einem der vorhergehenden Ansprüche, wobei eine Mehrzahl von mobilen Vorrichtungen über die drahtlose lokale Netzwerkverknüpfung mit dem drahtlosen Zugangspunkt verbunden ist und mindestens eine der Mehrzahl von mobilen Vorrichtungen einem zweiten zellularen Netzwerk (3a, 3b, 3c, 3d) zugeordnet ist, wobei das zweite zellulare Netzwerk einen jeweiligen zweiten Gatewayserver (25a, 25b, 25c, 25d) für den Zugang zu einem zweiten Sprachdienst aufweist, der dem zweiten zellularen Netzwerk über das öffentliche Weitverkehrsnetz zugeordnet ist, ferner umfassend:
Speichern einer Zuordnung zwischen jedem der Mehrzahl mobiler Vorrichtungen und ihrem jeweiligen Gatewayserver in einem Datenspeicher;
die Gatewayserver-Anwesenheitsinformationen in Bezug auf die Zugänglichkeit eines jeden Gatewayservers (s21) zu verarbeiten; und
bei Erkennen, dass mindestens eines der zellularen Gateways nicht verfügbar ist:
Identifizieren aller mobilen Vorrichtungen, die Subskribenten des mobilen Netzwerks sind, das dem nicht verfügbaren zellularen Gateway entspricht; und
Anweisen aller identifizierten mobilen Vorrichtungen, sich über einen jeweiligen ersten Pfad (s31) mit dem Sprachdienst zu verbinden.

6. Computerprogramm, umfassend ausführbare Anweisungen, die, wenn das Programm von einem Prozessor ausgeführt wird, der in einem drahtlosen Zugangspunkt (17) umfasst ist, den Prozessor veranlassen, das Verfahren nach einem der Ansprüche 1, 3, 4 oder 5 durchzuführen.

7. Drahtloser Zugangspunkt (17), der in Form einer drahtlosen lokalen Netzwerk-, WLAN-, Routing- und Modemvorrichtung vorliegt und geeignet ist, den Zugang mindestens einer mobilen Vorrichtung (9) zu einem Sprachdienst zu verwalten, der sich in einem zellularen Netzwerk (3) befindet, wobei der Sprachdienst durch eine Basisstation (13) des zellularen Netzwerks und auch über einen Gatewayserver (25) zugänglich ist, der für den drahtlosen Zugangspunkt zugänglich ist, wobei sich der Gatewayserver an einer Begrenzung zwischen dem zellularen Netzwerk und einem öffentlichen Weitverkehrsnetzwerk (23) befindet, wobei die mindestens eine mobile Vorrichtung eine zellulare Netzwerkschnittstelle (71) und eine drahtlose Netzwerkschnittstelle (73) aufweist, wobei die mindestens eine mobile Vorrichtung dazu ausgelegt ist, sich mit dem Sprachdienst über einen ersten Pfad von der mobilen Vorrichtung zu dem Sprachdienst über die Basisstation und das zellulare Netzwerk zu verbinden, und einen zweiten Pfad von der mobilen Vorrichtung über den drahtlosen Zugangspunkt, das öffentliche Weitverkehrsnetz, den Gatewayserver und das zellulare Netzwerk, wobei der drahtlose Zugangspunkt (17) umfasst:
eine drahtlose Netzwerkschnittstelle (31) zur Kommunikation mit der mindestens einen mobilen Vorrichtung;
eine Weitverkehrsnetzwerk-Schnittstelle (35) zur Kommunikation mit dem öffentlichen Weitverkehrsnetzwerk; Mittel zum Überwachen (27), ob die mindestens eine mobile Vorrichtung aktuell über den zweiten Pfad mit dem Sprachdienst verbunden ist; und **dadurch gekennzeichnet, dass** der drahtlose Zugangspunkt ferner umfasst:
Mittel zum Verarbeiten von Anwesenheitsinformationen (57), wobei die Anwesenheitsinformationen von einem Gateway-Anwesenheitsmonitor (27) empfangen werden, der sich in dem öffentlichen Weitverkehrsnetzwerk befindet und sich auf die Zugänglichkeit des Gatewayservers über das öffentliche Weitverkehrsnetzwerk bezieht; und
Mittel zum Anweisen (17) der mindestens einen mobilen Vorrichtung, sich mit dem Sprachdienst über den ersten Pfad zu verbinden, wenn unter Verwendung der Mittel zum Überwachen und der Mittel zum Verarbeiten bestimmt wird, ob die mindestens eine mobile Vorrichtung mit dem Sprachdienst über den zweiten Pfad verbunden ist und der Gatewayserver nicht über das öffentliche Weitverkehrsnetzwerk zugänglich ist.

8. Drahtloser Zugangspunkt nach Anspruch 7, wobei die mindestens eine mobile Vorrichtung dazu ausgelegt werden kann, über den zweiten Pfad unter Verwendung von Voice-over Wi-Fi, VoWiFi, auf den Sprachdienst zuzugreifen und über den ersten Pfad unter Verwendung von Voice-over LTE, VoLTE, auf den Sprachdienst zuzugreifen, wobei die mindestens eine mobile Vorrichtung von dem drahtlosen Zugangspunkt angewiesen werden kann, einen Übergabeprozess von VoWiFi zu VoLTE durchzuführen.

9. Drahtloser Zugangspunkt nach Anspruch 7 oder 8, wobei die Mittel zum Verarbeiten von Anwesenheitsinformationen dazu ausgelegt sind, periodisch weitere Anwesenheitsinformationen zu verarbeiten, und die Anweisungsmittel dazu ausgelegt sind, die mindestens eine mobile Vorrichtung anzuweisen, sich über den zweiten Pfad wieder mit dem Sprachdienst zu verbinden, wenn bestimmt wird, dass der Gatewayserver zugänglich ist.

10. Drahtloser Zugangspunkt nach einem der Ansprüche 7 bis 9, der ferner Mittel zum Erzeugen der Anwesenheitsinformation durch Herstellen eines Kontakts mit der mindestens einen zellularen Gateway-Vorrichtung über das öffentliche Weitverkehrsnetzwerk umfasst.

11. Drahtloser Zugangspunkt nach einem der Ansprüche 7 bis 10, wobei eine Mehrzahl von mobilen Vorrichtungen über die drahtlose lokale Netzwerkverknüpfung mit dem drahtlosen Zugangspunkt verbunden ist und mindestens eine der Mehrzahl von mobilen Vorrichtungen einem zweiten zellularen Netzwerk (3a, 3b, 3c, 3d) zugeordnet ist, wobei das zweite zellulare Netzwerk einen jeweiligen zweiten Gatewayserver (25a, 25b, 25c, 25d) für den Zugang zu einem zweiten Sprachdienst aufweist, der dem zweiten zellularen Netzwerk über das öffentliche Weitverkehrsnetzwerk zugeordnet ist, wobei der drahtlose Zugangspunkt ferner umfasst:
einen Datenspeicher (59), der eine Zuordnung zwischen jedem der Mehrzahl mobiler Vorrichtungen und ihrem jeweiligen Gatewayserver speichert; und
wobei:
die Mittel zum Verarbeiten von Anwesenheitsinformationen dazu ausgelegt sind, Gatewayserver-Anwesenheitsinformationen in Bezug auf die Zugänglichkeit der einzelnen Gatewayserver (s21) zu verarbeiten; und
die Mittel zum Anweisen (17), bei Erkennen, dass mindestens eines der zellularen Gateways nicht verfügbar ist, betreibbar sind, um:
alle mobilen Vorrichtungen, die Subskribenten des mobilen Netzwerks sind, das dem nicht verfügbaren zellularen Gateway entspricht, zu identifizieren; und
alle identifizierten mobilen Vorrichtungen anzuweisen, sich über einen jeweiligen ersten Pfad (s31) mit dem Sprachdienst zu verbinden.

## Revendications

1. Procédé d'exploitation d'un point d'accès sans fil (17), ledit point d'accès sans fil se présentant sous la forme d'un dispositif de routage et modem de réseau local sans fil, WLAN, et pouvant être connecté à un réseau étendu public (23), le point d'accès sans fil étant exploité de manière à gérer l'accès d'au moins un dispositif mobile (9) à un service vocal situé dans un réseau cellulaire (3), dans lequel le service vocal est accessible par l'intermédiaire d'une station de base (13) du réseau cellulaire et également par l'intermédiaire d'un serveur passerelle (25), accessible par le point d'accès sans fil (17), ledit serveur passerelle étant situé à une frontière entre le réseau cellulaire et le réseau étendu public (23), le point d'accès sans fil comportant :
une interface de réseau sans fil (31) pour la communication avec l'au moins un dispositif mobile par une liaison de réseau local sans fil (19) ; et une interface de réseau étendu (35) pour la communication avec le réseau étendu public, et
l'au moins un dispositif mobile comportant :
une interface de réseau cellulaire (71) et une interface de réseau sans fil (73), l'au moins un dispositif mobile étant configuré pour se connecter au service vocal sur un premier chemin allant du dispositif mobile au service vocal par l'intermédiaire de la station de base et du réseau cellulaire, et sur un second chemin partant du dispositif mobile par l'intermédiaire du point d'accès sans fil, du réseau étendu public, du serveur de passerelle et du réseau cellulaire ;
le procédé, réalisé par le point d'accès sans fil (17), comprenant les étapes de :
surveillance que l'au moins un dispositif mobile est actuellement connecté ou non au service vocal sur le second chemin ; et **caractérisé par** les étapes de :
traitement d'informations de présence, lesdites informations de présence étant reçues à partir d'un moniteur de présence de passerelle (27) situé dans le réseau étendu public et se rapportant à l'accessibilité du serveur passerelle par l'intermédiaire du réseau étendu public (s21) ; et
en fonction de ladite surveillance et dudit traitement des informations de présence, si l'au moins un dispositif mobile est connecté au service vocal sur le second chemin et le serveur passerelle n'est pas accessible par l'intermédiaire du réseau étendu public (s29), commande par le point d'accès sans fil à l'au moins un dispositif mobile de se connecter au service vocal sur le premier chemin (s31).

2. Procédé selon la revendication 1, dans lequel l'au moins un dispositif mobile est configurable pour accéder au service vocal sur le deuxième chemin par la technologie Voix sur Wi-Fi, VoWiFi, et pour accéder au service vocal sur le premier chemin par la technologie Voix sur LTE, VoLTE, dans lequel le point d'accès sans fil peut commander à l'au moins un dispositif mobile de réaliser un processus de transfert de VoWiFi vers VoLTE.

3. Procédé selon n'importe quelle revendication précédente, comprenant en outre :
le traitement d'autres informations de présence ; et
si le serveur de passerelle est jugé accessible, commander à l'au moins un dispositif mobile de se connecter au service vocal sur le second chemin (s35).

4. Procédé selon n'importe quelle revendication précédente comprenant en outre la génération desdites informations de présence en établissant un contact avec l'au moins un dispositif de passerelle cellulaire.

5. Procédé selon n'importe quelle revendication précédente, dans lequel une pluralité de dispositifs mobiles est connectée au point d'accès sans fil par la liaison de réseau local sans fil, et au moins un de la pluralité de dispositifs mobiles est associé à un second réseau cellulaire (3a, 3b, 3c, 3d), le second réseau cellulaire comportant un second serveur passerelle respectif (25a, 25b, 25c, 25d) pour l'accès à un second service vocal associé au second réseau cellulaire par l'intermédiaire du réseau étendu public, comprenant en outre :
le stockage dans une mémoire de données, d'une association entre chacun de la pluralité de dispositifs mobiles et son serveur de passerelle respectif ;
le traitement d'informations de présence de serveur passerelle se rapportant à l'accessibilité de chaque serveur passerelle (s21) ; et
en cas de détection qu'au moins une des passerelles cellulaires n'est pas disponible :
l'identification de tout dispositif mobile qui est abonné au réseau cellulaire correspondant à la passerelle cellulaire indisponible ; et
la commande à tout dispositif mobile identifié de se connecter au service vocal sur un premier chemin respectif (s31).

6. Programme d'ordinateur comprenant des instructions exécutables qui, à l'exécution du programme par un processeur compris dans un point d'accès sans fil (17), amènent le processeur à entreprendre le procédé selon l'une quelconque des revendications 1, 3, 4 ou 5.

7. Point d'accès sans fil (17), se présentant sous la forme d'un dispositif de routage et modem d'un réseau local sans fil, WLAN, et apte à gérer l'accès d'au moins un dispositif mobile (9) à un service vocal situé dans un réseau cellulaire (3), le service vocal étant accessible par l'intermédiaire d'une station de base (13) du réseau cellulaire et également par l'intermédiaire d'un serveur passerelle (25), accessible par le point d'accès sans fil (17), ledit serveur passerelle étant situé à une frontière entre un réseau cellulaire et un réseau étendu public (23), l'au moins un dispositif mobile comportant une interface de réseau cellulaire (71) et une interface de réseau sans fil (73), dans lequel l'au moins un dispositif mobile est configuré pour se connecter au service vocal sur u premier chemin allant du dispositif mobile au service vocal par l'intermédiaire de la station de base et du réseau cellulaire, et sur un second chemin partant du dispositif mobile par l'intermédiaire du point d'accès sans fil, du réseau étendu public, du serveur de passerelle et du réseau cellulaire, ledit point d'accès sans fil (17) comprenant
une interface de réseau sans fil (31) pour la communication avec l'au moins un dispositif mobile ;
une interface de réseau étendu (35) pour la communication avec le réseau étendu public ;
un moyen de surveillance (27) que l'au moins un dispositif mobile est actuellement connecté ou non au service vocal sur le second chemin ; et **caractérisé en ce que** le point d'accès sans fil comprend en outre :
un moyen de traitement d'informations de présence (57), lesdites informations de présence étant reçues à partir d'un moniteur de présence de passerelle (27) situé dans le réseau étendu public et se rapportant à l'accessibilité du serveur de passerelle par l'intermédiaire du réseau étendu public ; et
un moyen de commande (17) à l'au moins un dispositif mobile de se connecter au service vocal sur le premier chemin à la détermination, à l'aide du moyen de surveillance et du moyen de traitement, que l'au moins un dispositif mobile est connecté au service vocal sur le second chemin et que le serveur de passerelle n'est pas accessible par l'intermédiaire du réseau étendu public.

8. Point d'accès sans fil selon la revendication 7, dans lequel l'au moins un dispositif mobile est configurable pour accéder au service vocal sur le second chemin par la technologie Voix sur Wi-Fi, VoWiFi, et pour accéder au service vocal sur le premier chemin par la technologie Voix sur LTE, VoLTE, dans lequel le point d'accès sans fil peut commander à l'au moins un dispositif mobile de réaliser un processus de transfert de VoWiFi vers VoLTE.

9. Point d'accès sans fil selon la revendication 7 ou 8, dans lequel le moyen de traitement d'informations de présence est configuré pour traiter périodiquement d'autres informations de présence, et le moyen de commande est configuré pour commander à l'au moins un dispositif mobile de se reconnecter au service vocal sur le deuxième chemin s'il est déterminé que le serveur passerelle est accessible.

10. Point d'accès sans fil selon l'une quelconque des revendications 7 à 9, comprenant en outre un moyen de génération desdites informations de présence en établissant un contact avec l'au moins un dispositif de passerelle cellulaire par l'intermédiaire du réseau étendu public.

11. Point d'accès sans fil selon l'une quelconque des revendications 7 à 10, dans lequel une pluralité de dispositifs mobiles est connectée au point d'accès sans fil par la liaison de réseau local sans fil, et au moins un de la pluralité de dispositifs mobiles est associé à un second réseau cellulaire 93a, 3b, 3c, 3d), le second réseau cellulaire comportant un second serveur passerelle respectif (25a, 25b, 25c, 25d) pour l'accès à un second service vocal associé au second réseau cellulaire par l'intermédiaire du réseau étendu public, le point d'accès sans fil comprenant en outre :
une mémoire de données (59) stockant une association entre chacun de la pluralité de dispositifs mobiles et son serveur de passerelle respectif ; et
dans lequel :
le moyen de traitement d'informations de présence est configuré pour traiter des informations de présence de serveur de passerelle relatives à l'accessibilité de chaque serveur de passerelle (s21) ; et
le moyen de commande (17), à la détection qu'au moins une des passerelles cellulaires n'est pas disponible, est exploitable pour :
identifier tout dispositif mobile qui est abonné au réseau cellulaire correspondant à la passerelle cellulaire indisponible ; et
commander à tout dispositif identifié de se connecter au service vocal sur un premier chemin respectif (s31).
